# EUROPEAN PATENT SPECIFICATION

(11) **EP 1 292 208 B1**
(45) Date of publication and mention of the grant of the patent: **07.03.2007**
(21) Application number: 01923406.1
(22) Date of filing: 19.04.2001
(51) Int. Cl.: A01G 5/04

(54) **FLOWER ARRANGING APPARATUS**
VORRICHTUNG FÜR EINE BLUMENANORDNUNG
DISPOSITIF D'ARRANGEMENT FLORAL

(30) Priority: 19.04.2000 AU PQ706500
(43) Date of publication of application: 19.03.2003
(73) Proprietor: Billion Limited, London SW1Y 6RH (GB)
(72) Inventor: WRIGHT, Dale Kathleen, Pullenvale, QLD 4069 (AU)
(74) Representative: Valkeiskangas, Tapio Lassi Paavali
(86) International application number: PCT/AU2001/000450
(87) International publication number: WO 2001/080693

(56) References cited:
- AU-A- 4 121 393
- DE-U- 29 801 536
- DE-U- 29 817 173
- DE-U- 29 906 740
- FR-A- 2 275 990
- GB-A- 2 191 692
- US-A- 5 142 820

## Description

### FIELD OF INVENTION

THIS INVENTION relates to flower arranging apparatus, and has particular application to apparatus for arranging flowers in a bouquet, posy or bunch, and in this application, reference will be made to such application. However, it will be appreciated that the invention could be used for arranging, holding or supporting other plant parts or articles for decorative or artistic purposes, or for display in vases.

### BACKGROUND ART

Flowers and such like may be arranged as bouquets, bunches or posies, and each of these terms has a particular meaning in the art of flower arranging, mainly associated with the composition, number of stalks or overall size of the arrangement. Additionally, single stem arrangements may be provided. In this specification, unless the context requires otherwise, the terms "bunch" and "bunch of flowers" are to be understood to include posies, bunches, bouquets, sheafs and single stems, and may include ribbons, balloons, and other decorative items which may be added. Further, the terms "item" and "elongate item" are to be understood to include flowers, greenery, and the stalks or stems thereof, as well as any of the aforementioned decorative items used to constitute a bunch, unless the meanings are clearly not appropriate in the context in which the terms are used.

In order to arrange flowers in a bunch, whether to be held in the hand or placed in a vase or the like, a florist typically selects flowers or other elongate items, such as foliage, one item at a time with one hand and holds the accumulating elongate items which will form the bunch in the other hand. If the florist decides that the bunch requires a different arrangement, it is often difficult to rearrange the items without dismantling the whole bunch and starting over. Additionally, a bunch is frequently arranged by selecting items for the centre of the bunch first, and then adding further items to the periphery of the bunch, tying the stems as assembly of the bunch progresses, and turning the bunch around and around until completed. This process often requires both hands, usually involves a large amount of handling, and may result in undesirable bruising of the stems. Additionally, it is often difficult to add an item to the interior of the bunch.

Professional florists are frequently interrupted by telephone calls or personal enquiries during the creation of a bunch of flowers, which often requires that the partially completed bunch be put down, which often results in the bunch having to be fully re-worked, often involving loss of time. Reworking also involves undesirable extra handling of the plant material which may result in damage to the stems, foliage and/or flowers.

Floral bouquets are often handled too much in trying to create an end product of artistic quality. Frequently, there is no planning as to the composition of the bouquet, and so, the stalks at the tying point can become so bruised by rearranging the bouquet that the item has to be discarded. Even where the item is not discarded, excessive handling often shortens the life of the flowers and/or greenery. Sometimes, the resulting bunch is untidy or not to its optimum presentation because the flower arranger is reluctant to rearrange the bunch to achieve a desired effect, particularly if the supply of flowers or other items is limited.

Japanese Patent Specification No. 08126561 (Sugamura, T.) discloses a cover board for insertion onto a vase to prevent spillage of water, the cover board having a plurality of slits arranged in a radial pattern extending from the centre of the cover board. The main application of the cover board is in vases in moving vehicles, such as railway carriages, and the purpose of the cover board is to prevent spillage of water from the vase. The cover board also provides for the one or more flowers to be inserted through the slits, which prevent the flowers from falling as a result of shaking of the railway carriage during travel. Further, the slits appear to be prone to tearing during use.

As another example of the prior art US patent specification No. 5 142 820 can be mentioned.

The present invention aims to provide a flower arranging apparatus which alleviates one or more of the abovementioned problems and which will, in use, result in efficient assembly of a bunch of flowers. Other objects and advantages may hereinafter become apparent.

### DISCLOSURE OF THE INVENTION

With the foregoing in view, this invention in one aspect resides broadly in flower arranging apparatus for arranging a bunch of flowers according to claim 1.

Suitably, the predetermined force is sufficient to support the elongate item(s) in the penetration against sliding therethrough under its (their) own weight, but permit sliding of the elongate item(s) therethrough under an axial force (tensile or compressive) which would be insufficient to cause breakage or failure of the elongate item(s).

In one form, each penetration is sized to receive a single elongate item of a desired thickness. In such form, the size may also be limited so as to permit the gripping means to function in preventing the elongate items from sliding through the penetration in a direction opposite to that in which the elongate item was introduced through the penetration. For example, once a flower stem has been inserted to a particular position, it would not be able to be withdrawn. In another form, one or more of the penetrations are sized to accommodate a plurality of elongate items. In a preferred form, each penetration is provided in the form of a plurality of slits in the sheet, each slit extending radially from the centre of the penetration to form the fingers between adjacent slits. In such form, the slits form a plurality of wedges or triangles in radially abutting relationship, the wedges or triangles forming the fingers. It will be appreciated that in such form, the penetrations are not necessarily open when the fingers are in their relaxed, radially abutting relationship. However, the penetrations may be opened by deflection of the fingers, such as by the insertion of an elongate item through the apertures formed by the opening of the penetrations.

In one form, the reinforcing means may be provided by a thickening of the flexible material surrounding the penetrations, or about the extremities of the slits. In such form, the thickening may be provided by pressing the flexible sheet between rollers or plates having a pattern for thickened portions of the sheet. In another form, the ends of the slits are provided with tear prevention means in the form of a rounded aperture terminating each slit. In yet another form, the ends of the slits may be reinforced by providing both a thickening of the material and the rounded terminal apertures. Additional rounded apertures may be provided along the length of each slit intermediate the ends and/or the intersection with other slits.

In use, the fingers may be deformed away from the plane of the sheet by passing one or more elongate items through the slits. The undeformed fingers thus form a closed aperture which is openable by performing the aforesaid deformation. The material forming the sheet is deformable with sufficient resilience to function in gripping the elongate item or items. Preferably, the sheet is resiliently deformable, and may be cut or formed, for example, from a flexible plastics material. In such form, the apparatus may be re-used. Because of the risk of failure of the flexible material when the slit is subjected to a stretching force transverse to the direction of the slit, the mode of failure possibly being tearing of the material beyond the end of the slit, each slit is suitably provided with reinforcing means which is preferably a rounded aperture terminating the extent of the slit.

In one form, the sheet is substantially planar, circular and of substantially constant thickness, except for localised reinforcing or strengthening features that form the reinforcing means if the reinforcing means is provided in that form. In such form, it is preferred that the penetrations be arranged in a radially symmetrical pattern. In an alternative form, the flexible sheet is not planar, but shaped to conform to a three dimensional former. In a further alternative form, for example, the sheet may be shaped to conform to a hemispherical, torispherical, or half prolate spheroid surface. In such form, the lower arranging apparatus may be used in conjunction with known flower arranging devices, such as, for example, a block of rigid foamed material having frangible cell walls defining the cells of the foam. The use of flower arranging apparatus of the present invention in such a way is believed to provide a firmer arrangement since the frangibility of the foamed material may lead to widening of the orifice to each opening created by the insertion of elongate items into the block.

The slits are preferably of uniform length, and preferably arranged diametrically at uniform and even angular spacings from one another. The slits forming each penetration are preferably all the same length for each penetration, but may be provided in various lengths for different penetrations so that a range of penetration sizes is provided for receiving elongate items of different thickness. In a preferred form, for smaller penetrations there are three diametrically arranged slits arranged to cross over one another at 60° from one another, and for larger penetrations, four slits arranged at 45° from one another. It will be appreciated that the strength of the material (determined by its thickness and composition) may be used to determine the number of fingers to be provided in order to provide the predetermined gripping force of each finger.

In another aspect, the invention resides broadly in a method of forming a bunch of flowers including:
providing flower arranging apparatus as herein described;
selecting cut flowers, foliage and/or decorative items to make up the bunch of flowers; and
inserting the cut flowers, foliage and/or decorative items one or more at time through the one or more penetrations in the flexible sheet until the bunch is completed. If desired, the bunch may be completed by tying the bunch at the tying point with ribbon, string, other thread-like material.

Preferably, the flower arranging apparatus is held in one hand whilst the first item is held in the other hand and inserted through one of the penetrations. Subsequently, the first inserted item is held in one hand with the flower, arranging apparatus resting on the outside of the thumb and forefinger so that the remaining items may be inserted through the penetration (or the other penetrations) in the flower arranging apparatus with the other hand. After insertion, selected elongate items in the bunch may be slid axially through the bunch to a desired position with respect to the remainder of the bunch in order to provide the desired effect. The gripping means is preferably formed so as to substantially prevent the bunch as a whole being moved axially in the direction against which the elongate items were introduced through the penetration(s). It is believed that quite a tight bunch of flowers may be assembled using the apparatus of the present invention since the fingers bending down provide a relatively broad surface area retaining the elongate items in place, but the flat sheet is prevented from tearing by virtue of the reinforcing and/or tear prevention means.

### BRIEF DESCRIPTION OF THE DRAWINGS

In order that this invention may be more readily understood and put into practical effect, reference will now be made to the following drawings which illustrate preferred embodiments of the invention, and wherein:
Fig. 1 is a pictorial view of flower arranging apparatus according to the invention;
Fig. 2 is a pictorial view of the flower arranging apparatus of Fig. 1 showing the insertion of flower stalks;
Fig. 3 is a pictorial view of the flower arranging apparatus of Figs. 1 and 2 with a bunch of flowers and foliage held therein;
Fig. 4 is a detailed view of the flower arranging apparatus and bunch of Fig. 3;
Fig. 5 collectively shows several alternative flower arranging apparatus according to the invention with different arrangements of penetrations;
Fig. 6 collectively shows seven alternative external shapes for the flower arranging apparatus according to the invention;
Fig. 7 is a pictorial view of a bunch of flowers and foliage wrapped in cellophane or the like held by two examples of the flower arranging apparatus according to the invention;
Fig. 8 is a pictorial view of an alternative selection to that of Fig. 7 of flower arranging apparatus according to the invention;
Fig. 9 is a pictorial view of a further alternative form of flower arranging apparatus according to the invention in the form of a strip of material;
Fig. 10 is pictorial view showing diagrammatically the insertion of different size stalks through the penetrations of flower arranging apparatus according to the invention;
Fig. 11 is a side elevation of a half-prolate-spheroid flower arranging apparatus according to the invention;
Fig. 12 is an exploded pictorial view of the half-prolate-spheroid flower arranging apparatus of Fig. 11 as used with a posy or bouquet holding assembly;
Fig. 13 is a diagrammatic sectional view of the half prolate-spheroid flower arranging apparatus of Fig. 11 showing the insertion of flower stalks into water retaining means;
Fig. 14 is a pictorial view of the posy or bouquet holding assembly of Fig. 12 showing diagrammatically the insertion of flower stalks;
Fig. 15 is a side elevation of a first form of cutter which may be used to cut through the sheet material to form the penetration(s) for flower arranging apparatus according to the invention;
Fig. 16 is a side elevation of a second form of cutter which may be used to cut through the sheet material to form the penetration(s) for flower arranging apparatus according to the invention;
Fig. 17 is a pictorial view of two cutting dies for use with the cutters of Figs. 15 and 16; and
Fig. 18 is a pictorial view of an anvil for use with either of the cutting dies of Figs. 16 and 17.

### DETAILED DESCRIPTION OF THE DRAWINGS

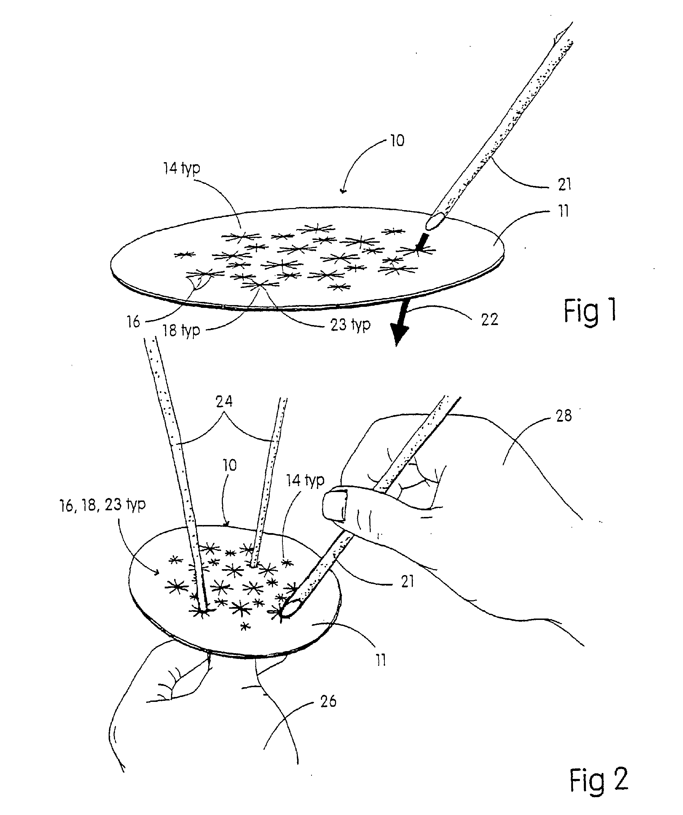

The flower arranging apparatus 10 shown in Fig. 1 is made up of a flat, planar sheet of substantially flexible plastics material shaped to a circular disc 11 having penetrating therethrough a plurality of penetrations shown typically at 14, each penetration having four slits 16 arranged at 45° to one another, and each slit terminating in a rounded aperture shown typically at 23. A wedge shaped finger shown typically at 18 is thus formed between each adjacent slit, so that there are 8 fingers corresponding to the four slits for each penetration, and the penetrations are distributed about the surface of the disc in a regular, radially symmetrical pattern.

A flower stem 21 may be inserted through one of the penetrations in the direction of arrow 22, the fingers being resiliently deformed downward by insertion of a flower stem through the penetration. The penetrations are arranged in a radially symmetrical pattern about the face of the disc and in different sizes.

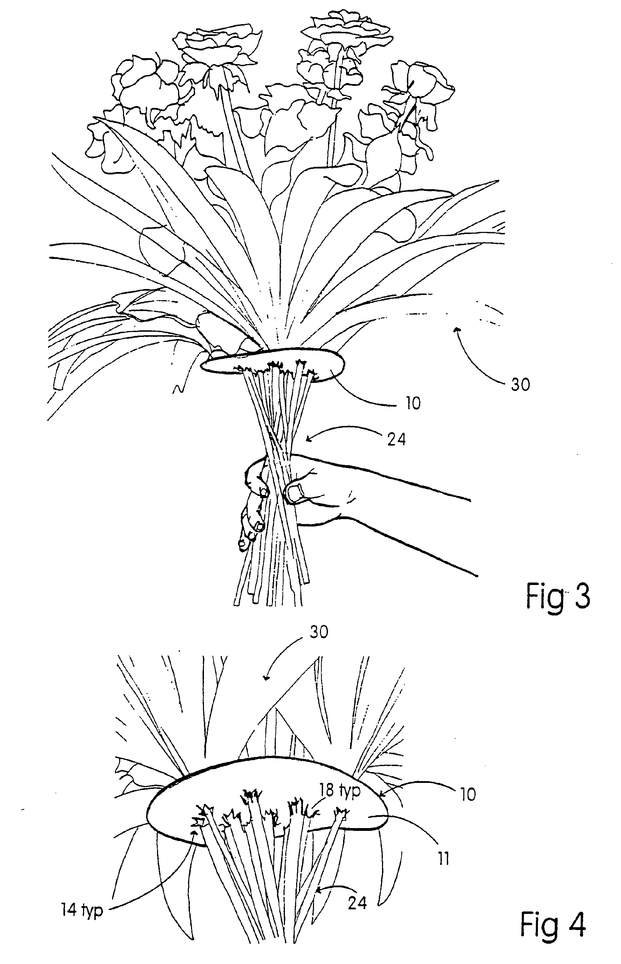

Referring to Fig. 2, a user may grasp the flower stems already inserted through penetrations shown at 24 with the left hand 26 and use the right hand 28 to grasp the flower stem 21 for insertion through a penetration, the disc being supported on the thumb and fingers of the left hand, with the stalks passing through the grip of the left hand. The process of adding more flower stems may be continued one or several stems at a time until a bunch of flowers 30 is assembled as shown in Fig. 3. A user could insert flowers according to colour, pattern, texture and foliage. The insertion action of each flower stem spreads the fingers which resiliently grip the flower stem as can be seen in rig. 4. Of course, opposite hands may be used for left-handed users.

The user can finely adjust the arrangement of the bunch of flowers 30 by manipulation of the stems 24 below the disc, pulling selected ones further through, or pushing them back up, and/or manipulating their respective relative positions within the bunch. It will be seen that the bunch of flowers thus assembled is spread out due to the spacings between the respective penetrations disposed about the disc. Moreover, the user may assemble a bunch of flowers of a larger size than would be possible manually. The bunch of flowers shown in Fig. 3 is ready to wrap. The outside circumference of the disc enables a smooth wrapping of the paper that is uncrushed except as it approaches and passes through the tying point, so that the bunch is thus suitable for sale or presentation, or for placement in a vase. In a vase, there is often no need to re-arrange the bunch as it usually retains its shape and form. The stems are "free" to find their own position when the bunch is dropped into a vase. It can be seen also in the detailed view shown in Fig. 4 that the fingers 18 are bent downwardly by the insertion of the flower stem from the top of the disc through to the underside.

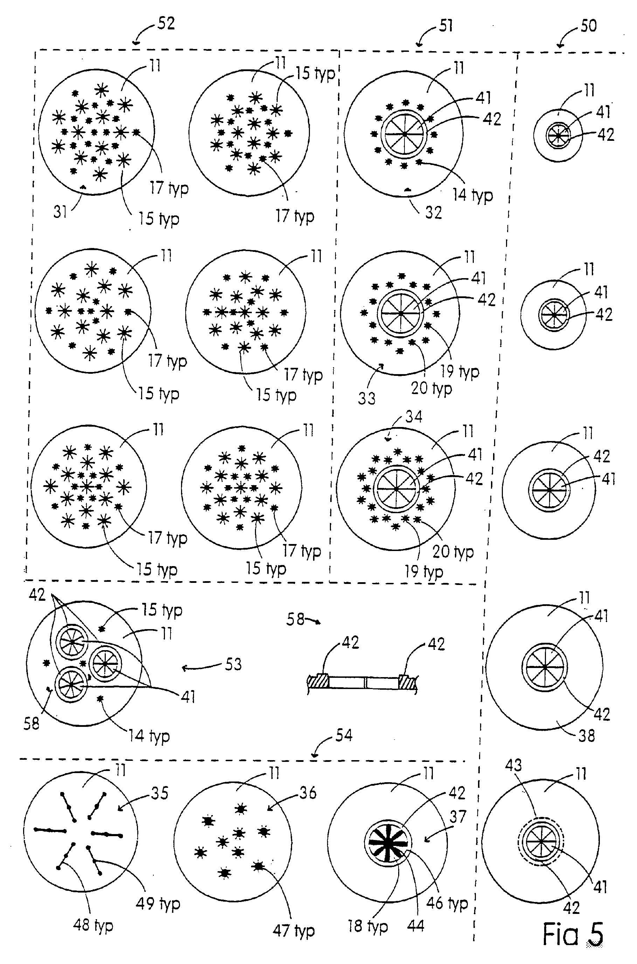

Several types of flower arranging apparatus are shown in Fig. 5, each having a circular disc, and grouped generally as described below. The penetrations in the discs shown are generally of the star-shaped slit form, with each slit terminating in a circular aperture which provides the anti-tearing means, although due to the size of the representations of the penetrations, these are not necessarily shown in all examples.

The flower arranging apparatus in the group shown at 50 may be referred to as "posy discs", each having a large central penetration 41 circumscribed by a ring of reinforcing 42 to prevent the slits from tearing into longer slit across the material from which the disc is constructed. The disc is shown in four different sizes and is suitable for grouping of flowers to form a head of colour. The single disc may be used to group flowers at the calyx and provides a head of flowers that is used for impact or focal point. This form of the invention could be used, for example, in forming wreaths, or for arrangements either on their own or in vases. The single grouping penetration allows the flowers to be bunched together for wreaths, arrangements and garlands and in vases. In a vase with water where it is difficult to place stems in position other than interlocking them at angles, the single penetration may be used to group flowers having one stem longer than the others. The other stems may then be grouped with the longest stem in a single penetration and placed in the vase with the longest stem resting at the bottom of the vase, and the remainder of the bunch being supported by the predetermined force of the gripping means. Since the florist does not have to rely on the tying point, the use of the flower arranging apparatus of present invention permits the flowers in the bunch to be spaced apart from one another to give a less crowded, fuller looking bunch. Optionally, the reinforcing 42 may be circumscribed by a perforated ring 43 permitting the central portion of the disc to be removed from an annular portion.

The flower arranging apparatus in the group shown at 51 may be referred to as "ribbon discs" or "ribbon matts", and each disc in the group includes not only the large central penetration 41 as shown in group 50, but also several penetrations which are substantially the same as the penetrations 14 described in relation to Figs. 1 to 4, disposed outwardly from the reinforcing 42. In the example shown at 32, there are twelve penetrations disposed evenly around the disc, but in the example shown at 33, there are eight penetrations shown in an inner ring 19 and eight penetrations shown in an outer ring 20. In the example shown at 34, there are ten penetrations in each of the inner and outer rings.

The group shown at 52 may be referred to as "flower matts" and six examples of flower arranging apparatus are shown which would be suitable for mixed posies and bunches. In the example shown at 31, for example, there are twelve penetrations for thick stems shown typically at 15, and sixteen penetrations for thin stems shown typically at 17. Such a disc, for example, may have the popular "1 dozen roses" in the thick-stem penetrations, and foliage and/or filler flowers and/or other decorations in the thin-stem penetrations.

Different arrangements for the thick stem penetrations 15 and thin stem penetrations 17 are shown in the remaining five examples. The flower arranging apparatus shown at 53 is for a 3-posy grouping, and has three large penetrations each with the reinforcing 42 circumscribing the respective slits and equally spaced from, and evenly spaced about, the centre of the disc, with one thin stem penetration in the centre between the three large penetrations and three thin stem penetrations disposed evenly about the centre of the disc, and the remaining three thin stem penetrations being disposed radially between the respective large penetrations. Also shown at 53 is a section 58 of part of the disc showing the form of the reinforcing used in the disc shown at 53, and also for the discs shown at 50, 51 and 37.

In the group shown at 54, three alternative examples are provided. The example shown at 3 5 has six elongate slits shown typically at 48 extending radially, but spaced, from the centre of the disc. Each slit has a circular aperture shown typically at 49 at each end and another circular aperture centrally along the length of each slit. In the example shown at 36, there are nine penetrations shown typically at 47, three relatively close to the centre of the disc with their centres at the corners of an equilateral triangle, and six evenly spaced further out from the centre of the disc with their centres at the corners of a hexagon. Each penetration has a central circular opening and eight radially disposed slits extending radially from the opening. In the example shown at 37, the large central penetration is circumscribed by the reinforcing 42 in a similar fashion to that shown at 38, but has eight wide slits shown typically at 46 so that there is a spacing between each of the adjacent fingers shown typically at 18. The widening of the slits 46 also creates a central opening 44.

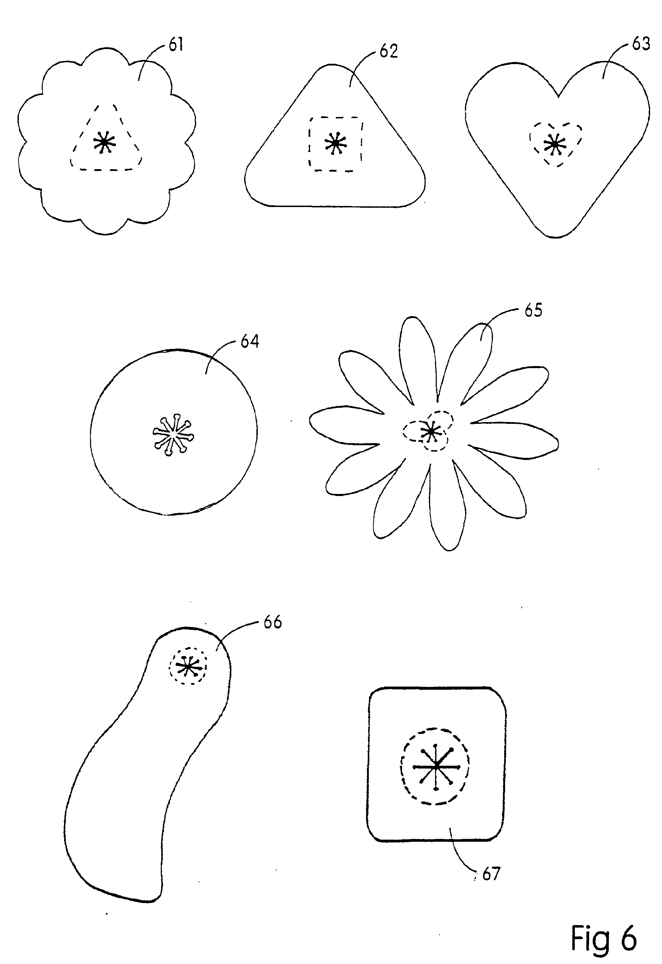

There are many internal and external shaped configurations possible for the sheet. For example, it will be seen in Fig. 6 that in the example shown at 61, a scalloped or daisy-shaped sheet has a triangular perforation ring or break-out line about its centre about which also is provided a star-slit penetration described above. In the example shown at 62, a triangular sheet has a square break-out line about its central penetration; in the example shown at 63, a heart-shaped sheet has a heart-shaped break-out line about its central penetration; in the example shown at 64, a circular disc has a centrally located penetration which is star-shaped with wide slits with circular end points; in the example shown at 65 a floral-shaped sheet with elongate petals has a trilobial break-out line about its central penetration; and in the example shown at 66 a paisley shaped sheet has a circular break-out line about an aperture in its rounded end.

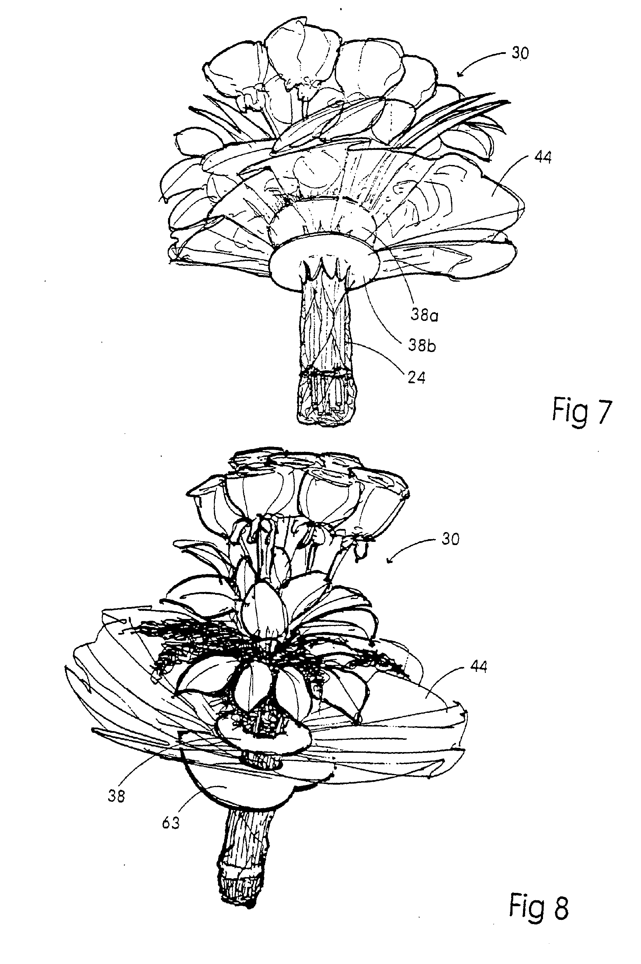

The bunch of flowers 30 shown in Fig. 7 and 8 has the lower ends (the stalks or stems 24) of the flowers wrapped in cellophane or similar transparent, water retaining material 44. In the example shown in Fig. 7 there are two sheets of the type shown at 38 in Fig. 5 spaced from one another along the stalks or stems, the wrapping material extending around the stalks or stems, the lower sheet 38b being used to hold the wrapping in place around the stalks or stems as it splays outwardly from beneath the upper sheet 38a.

In the example shown in Fig. 8, the wrapping material 44 is held in place by the heart-shaped example 63. If provided with a circular perforation ring 43 as described above, the centre may be pushed out and used after wrapping the bunch to complete the bunch and support the heart-shaped disc. If desired, ribbon or such like may be added to the bunch for decoration, and water may be added to the bottom of the bunch and retained inside the cellophane wrapping material. Additionally, in the example shown in Fig. 8, the heart-shaped sheet may be provided on cardboard which is glued or bonded to a sheet having the resilient fingers as hereinbefore described. Using the apparatus as described in relation to Figs. 7 and 8, it can be seen that the cellophane may be used to hold water to preserve the flowers and/or foliage in the bunch.

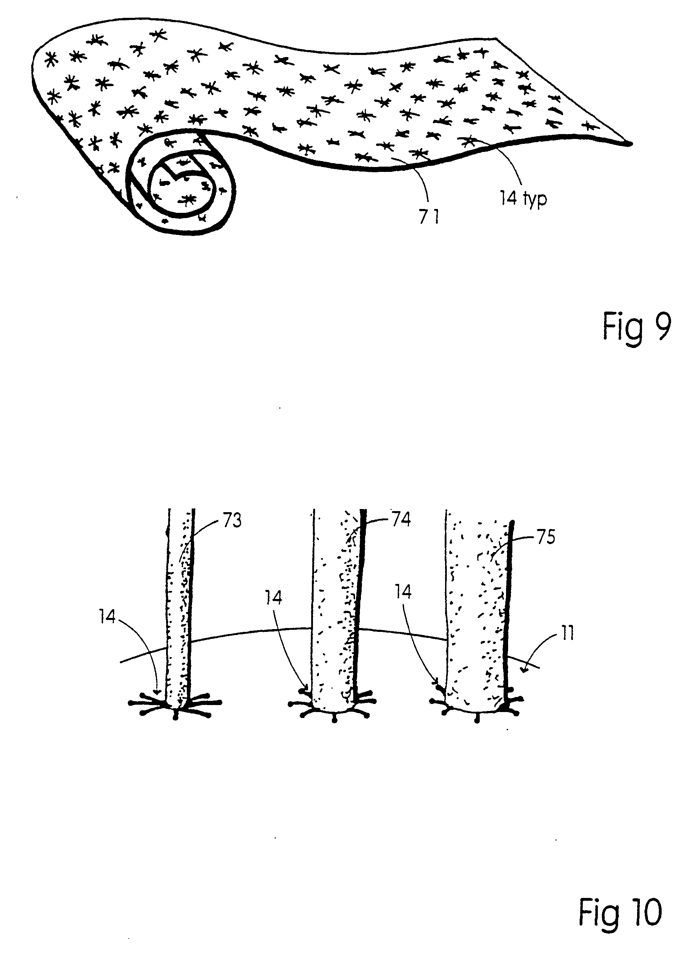

Referring to Fig. 9, the sheet may be formed from an extruded, injection moulded, blow moulded or calendered polymer in roll or sheet form as shown at 71. The penetrations shown typically at 14 may be stamped in place during the production process, or maybe provided after the external shape of each sheet has been stamped out. Reinforcing rings around the ends of the slits may also be provided by stamping the sheet to press the material thinner except for the location of the reinforcing. The placement of the penetrations may be marked on the roll or sheet to facilitate the manual punching of penetrations as desired. Different configurations of penetrations may be marked on each side of the sheet, or several arrangements in different colours may be printed or embossed on one or both sides.

Referring to Fig. 10, the penetration 14 can accommodate a relatively thin stem 73, a relatively medium sized stem 74, or a relatively thick stem 75 as shown, the relatively thick stem being held more tightly than the relatively medium sized stem and in turn the relatively thin stem, because a wider section of material forming the wedged shaped fingers is deflected by insertion of a thicker stem through the penetration.

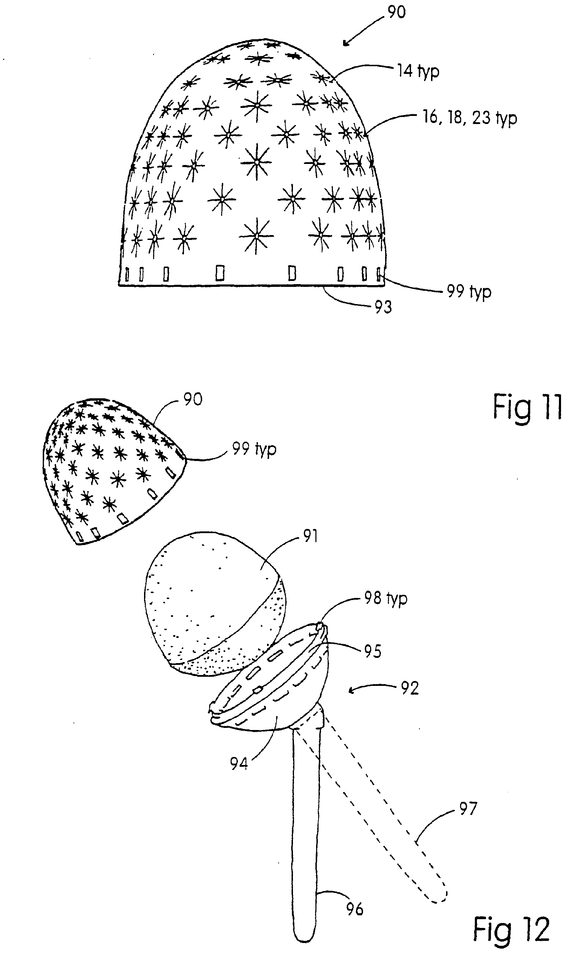

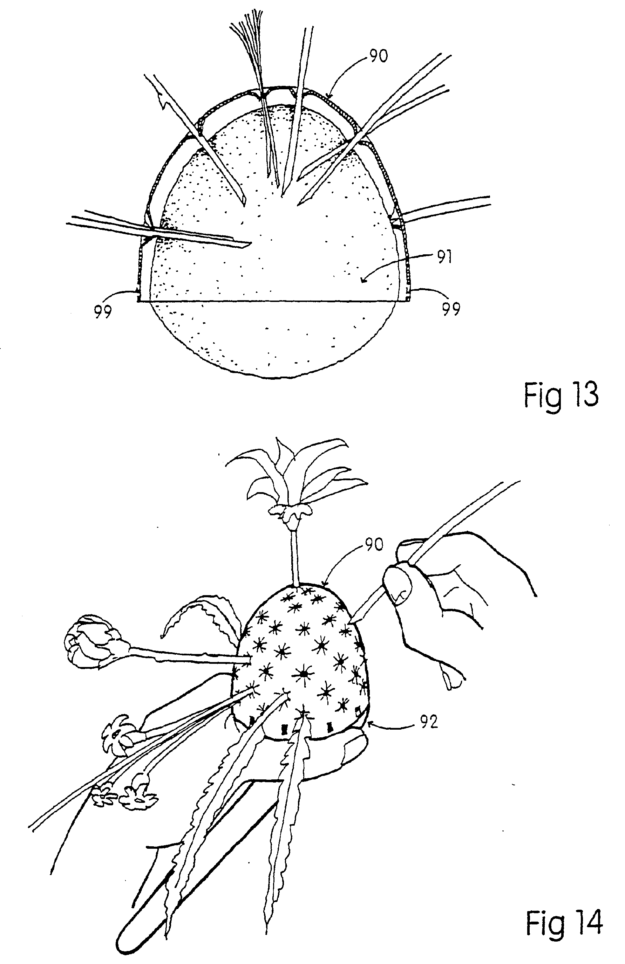

Referring to Fig. 11, the half-prolate-spheroid flower arranging apparatus 90 has a plurality of penetrations shown typically at 14 disposed about its surface and penetrating the sheet from which it is formed, each of the penetrations having the slits, terminal circular apertures and fingers as hereinbefore described. Sixteen rectangular apertures shown typically at 99 penetrate the half-prolate-spheroid flower arranging apparatus at evenly spaced intervals just above its circular lower edge 93. As shown in Fig. 12, the half-prolate-spheroid flower arranging apparatus is sized for its lower edge to fit over the lip 95 of the cup 94 of the posy or bouquet holder base 92 by inserting each of the four lug shown typically at 98 into a respective of rectangular aperture whereby the half-prolate-spheroid flower arranging apparatus may be retained on the base. A water retaining, porous body 91, approximately egg-shaped in configuration, is formed to fit inside the concave side of the half-prolate-spheroid flower arranging apparatus and also into the cup of the holder base. Extending from the cup is a handle 96 arranged such the bunch or bouquet is angled, although an axially extending handle may be provided in one alternative, as shown in dashed outline at 97. Flower or foliage stems (and/or other decorative items) may be inserted through the penetrations as shown in Figs. 13 and 14. The stems may penetrate into the water retaining body, which is typically formed from a frangible or friable foamed material which yields to the insertion of the stems.

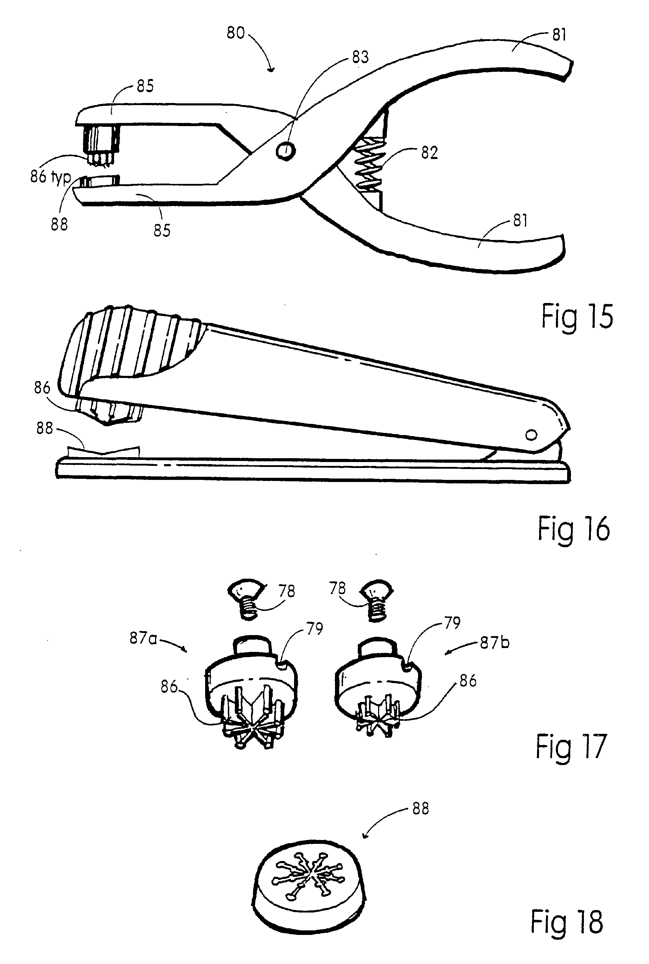

A first form of hole punch 80 shown in Fig. 15 includes two members having each a handle 81 at one end and jaw 85 at the other end in pivotal connection at a hinge 83 so that the member cross over one another in a similar fashion to a pair of scissors. The handles (and thereby the jaws) are urged to separate from one another by a spring 82, and one of the jaws 85 having a cutting die 87 having a set of eight radially disposed blades shown typically at 86 which mate against an anvil 88 on the opposing jaw. The hole punch may be used to form custom made flower holding sheets or discs, or to add extra penetrations to standard patterns for a custom effect according to the invention.

A second form of hole punch 89 shown in Fig. 16 is of a form adapted from a typical handheld stapler modified to receive the cutting die and anvil described with reference to the first form of hole punch of Fig. 15. The arms 84 of the hole punch are urged away from one another in a similar fashion to the typical stapler.

Referring to Figs. 17 and 18, two alternative cutting dies 87a and 87b are provided, one for large penetrations and the other for small penetrations. The ends of the cutting blades of the cutting dies are each provided with a cylindrical portion to form the rounded apertures in the sheet of the discs of the flower holding apparatus of the invention. The anvil 88 includes eight radially disposed slots (either of a constant depth or passing through the anvil) to receive the blades of the cutting dies, and also straight bored circular holes (the same depth as the slots or passing through the anvil, as the case may be), and there is a circular hole corresponding to the end points of the blades of both cutting dies so that the same anvil may be used in conjunction with either of the cutting dies. One of the cutting dies is installed in the hole punch (of with form described above) and retained in place with a screw 78, the cutting die selected being oriented by a locating lug 79 so that the blades are in register with the slots in the anvil.

The discs, whether planar or shaped, may be manufactured, for example, from a selection of water resistant, resilient and pliable thermoplastics materials, such as polyethylene, which is also suited to recycling and may be coloured in aesthetically pleasing shades of green to blend in with the stems and foliage. The sheet may also be formed from laminated plastics material to take advantage of the properties of various materials. The sheets may be manufactured by die-stamping shapes from extruded or calendered polymer in roll form or sheet form although other forms of manufacturing, such as cavity moulding (including injection moulding) may be utilised to form the basic shape of the sheet, especially where reinforcing is required. Alternatively, the material may be printed with the locations of the penetrations for specific styles of arrangements, and the printed forms may be colour coded for different applications. The user may then select the penetrations for cutting with a hole punch as hereinbefore described.

For the one dozen, mixed posy or bunch discs and the group posy discs, the arrangement of the penetrations in the required or pre-determined locations ensure that inserted flowers and other elements are in the correct location in the finished arrangement. Different sheets are possible for different arrangements and different sizes may be used to produce arrangements in different sizes, such as a posy, bunch or bouquet. The fingers are designed to grip the inserted stems at the inserted height, allowing adjustment up and down for trimming. It is possible to insert more than one stem into the same penetration, and the fingers simply resiliently deforming to grip all the stems inserted. The spaced arrangement of the penetrations also enables a user to produce a floral arrangement
where the flowers are displayed in their fullest, without crowding, unlike current practices where stems are tied together, cramping or damaging the flowers unless they are spaced out in a vase. With the device of the present invention, bunches of flowers as they should be seen in a vase may be assembled and held in the hand. The user is able to predetermine the creative work to the bouquet before beginning the assembly of the bunch, and has more control with respect to the cost of the flowers. Moreover, the fingers permit a stem or stalk to be removed with much less damage, if any, compared with the current practice of tying and retying the stems at a tying point. Larger stem flowers are usually heavier and require a firmer grip. It will be appreciated that increasing the number of slits increases the number of fingers, thereby giving better control of the stem passing through the penetration. However, fewer slits results in fewer fingers, but each finger is stronger, giving a stronger grip.

It is believed that there would be no need for the end user to re-arrange the bunch of flowers, once assembled in accordance with the invention, into a vase, but simply insert the arrangement including the sheet or disc. This has particular application in commercial floral arrangements to eliminate the need to trim arrangements in situ or to transport pre-arranged flowers complete in a vase to a desired site, as is sometimes done for hotel lobbies and the like. It is believed that the apparatus of the present invention reduces the number of flowers required to create an impressive display due to the volume created in the bunch by the spacing of the penetrations, leading to improved commercial margins for florists.

Additionally, the flower arranging apparatus of the present invention may be used to construct a sheaf of flowers (that is, an arrangement which is substantially planar) by assembly of the sheaf on a flat surface, such as a table, as is normally done, but then placing a flower holding apparatus according to the invention over the stems of the sheaf, with one or more stems passing through one or more corresponding penetrations in the sheet of flexible material. Where more than one penetration is provided, the penetrations may be aligned to afford the sheaf its generally planar configuration. Additionally, the flower arranging apparatus of the present invention may be used to construct a larger bunch of flowers than would be possible by hand since only some of the stems need to be held by the florist, with the remaining stems being held by the gripping means.

Although the invention has been described with reference to specific examples, it will be appreciated by persons skilled in the art that the invention may be embodied in many other forms which fall within the broad scope and ambit of the invention as defined by the following claims.

## Claims

1. Flower arranging apparatus for arranging a bunch of flowers including:
a sheet of substantially flexible material;
one or more penetrations (14) through said sheet and remote from the perimeter of said sheet, said penetrations being adapted to receive therethrough elongate items (21) of the bunch of flowers to be arranged;
gripping means operatively associated with at least one of said one or more penetrations (14) for gripping at least one of the elongate items (21) extending through the penetrations with a predetermined force; whereby each penetration (14) is provided in the form of a plurality of slits (16) in the sheet, each slit extending radially from the centre of the penetration to form the fingers (18) between adjacent slits, **characterized in that**
a rounded aperture (23) terminates each slit forming tear prevention means for preventing tearing of the flexible material about the penetration (14).

2. Flower arranging apparatus according to Claim 1 **characterized in that** said gripping means is formed so as to substantially prevent the bunch as a whole being moved axially with respect to the sheet in the direction against which the elongate items (21) were introduced through the penetration (14) or penetrations (14).

3. Flower arranging apparatus according to claim 1 or 2, **characterized in that** the sheet is substantially planar and of substantially constant thickness.

4. Flower arranging apparatus according to claim 1 or 2 **characterized in that** the sheet is shaped to conform to a three-dimensional former.

5. A method of forming a bunch of flowers **characterized by** the following steps;
providing flower arranging apparatus according to any one of Claims 1 to 4;
selecting cut flowers, foliage and/or decorative items to make up the bunch of flowers; and
inserting the cut flowers, foliage and/or decorative items one or more at a time through one or more of the penetrations (14) in the flexible sheet.

6. A method according to Claim 5, **characterized in that** the method further includes the step of tying the completed bunch of flowers at the tying point with ribbon, string, or thread.

7. A method according to Claim 5 or Claim 6, **characterized in that** the flower arranging apparatus is held in one hand whilst the first item is held in the other hand and inserted through one of the penetrations (14), and
subsequently, the first inserted item is held in one hand with the flower arranging apparatus resting on the outside of the thumb and forefinger so that the remaining items may be inserted through the penetration (14) or the other penetrations in the flower arranging apparatus with the other hand.

## Patentansprüche

1. Blumen-Anordnungsvorrichtung zum Anordnen eines Blumenstraußes, die umfasst:
eine Bahn aus im Wesentlichen flexiblem Material,
einen Durchbruch oder mehrere Durchbrüche (14) durch die Bahn und entfernt von dem Umfang der Bahn, wobei die Durchbrüche eingerichtet sind, um durch diese hindurch längliche Elemente (21) des Blumenstraußes, der anzuordnen ist, aufzunehmen,
Halteeinrichtungen, die mit wenigstens einem Durchbruch oder mit mehreren Durchbrüchen (14) wirkend verbunden sind, zum Halten wenigstens eines der länglichen Elemente (21), die sich durch die Durchbrüche hindurch erstrecken, mit einer vorgegebenen Kraft, wobei jeder Durchbruch (14) in Form einer Vielzahl von Schlitzen (16) in der Bahn bereitgestellt ist und sich jeder Schlitz radial von der Mitte des Durchbruchs erstreckt, um die Finger (18) zwischen benachbarten Schlitzen zu bilden, **dadurch gekennzeichnet, dass** eine runde Öffnung (21), die eine Einrichtung zum Verhindern von Reißen bildet, jeden Schlitz begrenzt, um Reißen des flexiblen Materials über dem Durchbruch (14) zu verhindern.

2. Blumen-Anordnungsvorrichtung nach Anspruch 1, **dadurch gekennzeichnet, dass** eine Längseinrichtung so ausgebildet ist, um im Wesentlichen zu verhindern, dass der Strauß als Ganzes in Bezug auf die Bahn axial gegen die Richtung bewegt wird, in der die länglichen Elemente (21) durch den Durchbruch (14) oder die Durchbrüche (14) eingesteckt wurden.

3. Blumen-Anordnungsvorrichtung nach Anspruch 1 oder 2, **dadurch gekennzeichnet, dass** die Bahn im Wesentlichen eben und von im Wesentlichen konstanter Dicke ist.

4. Blumen-Anordnungsvorrichtung nach Anspruch 1 oder 2, **dadurch gekennzeichnet, dass** die Bahn geformt wird, um einem dreidimensionalen Körper zu entsprechen.

5. Verfahren zum Bilden eines Blumenstraußes, **gekennzeichnet durch** die folgenden Schritte:
Bereitstellen einer Blumen-Anordnungsvorrichtung nach einem der Ansprüche 1 bis 4,
Auswählen von Schnittblumen, Blattwerk und/oder von dekorativen Elementen, die den Blumenstrauß bilden, und
Einstecken der Schnittblumen, des Blattwerks und/oder der dekorativen Elemente, einzeln oder zu mehreren gleichzeitig, **durch** den einen Durchbruch oder die mehreren Durchbrüche (14) in der flexiblen Bahn.

6. Verfahren nach Anspruch 5, **dadurch gekennzeichnet, dass** das Verfahren des Weiteren den Schritt des Bindens des fertigen Straußes an der Bindestelle mit Band, Schnur oder Draht umfasst.

7. Verfahren nach Anspruch 5 oder 6, **dadurch gekennzeichnet, dass** die Blumen-Anordnungsvorrichtung in einer Hand gehalten wird, während das erste Element in der anderen Hand gehalten wird und durch einen der Durchbrüche (14) eingesteckt wird, und
im Anschluss daran das erste Element in einer Hand gehalten wird, wobei die Blumen-Anordnungsvorrichtung außen von dem Daumen und dem Zeigefinger aufliegt, so dass die restlichen Elemente mit der anderen Hand durch den Durchbruch (14) oder die weiteren Durchbrüche in der Blumen-Anordnungsvorrichtung eingesteckt werden können.

## Revendications

1. Dispositif d'arrangement floral servant à arranger un bouquet de fleurs, comprenant :
une feuille de matière sensiblement flexible;
une ou plusieurs perforations (14) qui traversent ladite feuille et sont éloignées du périmètre de ladite feuille, lesdites perforations étant adaptées pour recevoir à travers elles des éléments allongés (21) du bouquet de fleurs qu'il s'agit d'arranger ;
des moyens de serrage associés fonctionnellement à au moins une de ladite ou desdites plusieurs perforations (14) pour serrer au moins un des éléments allongés (21) qui s'étendent à travers les perforations avec une force prédéterminée, dans lequel chaque perforation (14) est prévue sous la forme d'une pluralité de fentes (16) pratiquées dans ladite feuille, chaque fente s'étendant radialement à partir du centre de la perforation de manière à former les doigts (18) entre des fentes adjacentes,
**caractérisé en ce qu'**un trou arrondi (27) termine chaque fente en formant ainsi un moyen de prévention de la déchirure pour éviter que la matière flexible se déchire sur le tour de la perforation (14).

2. Dispositif d'arrangement floral selon la revendication 1, **caractérisé en ce que** lesdits moyens de serrage sont formés de manière à empêcher pratiquement le bouquet complet de se déplacer axialement par rapport à la feuille dans le sens inverse de celui dans lequel les éléments allongés (21) ont été introduits à travers la perforation (14) ou les perforations (14).

3. Dispositif d'arrangement floral selon la revendication 1 ou 2, **caractérisé en ce que** la feuille est à peu près plane et d'épaisseur à peu près constante.

4. Dispositif d'arrangement floral selon la revendication 1 ou 2, **caractérisé en ce que** la feuille est formée de manière à se conformer à un élément conformateur tridimensionnel.

5. Procédé pour former un bouquet de fleurs, **caractérisé par** les étapes suivantes ;
préparer un dispositif d'arrangement floral selon une quelconque des revendications 1 à4;
choisir des fleurs coupées, du feuillage et/ou des éléments décoratifs pour confectionner le bouquet de fleurs ; et
insérer les fleurs coupées, le feuillage et/ou les éléments décoratifs à raison d'un ou de plusieurs à la fois à travers une ou plusieurs des perforations (14) de la feuille flexible.

6. Procédé selon la revendication 5, **caractérisé en ce que** le procédé comprend en outre l'étape consistant à lier le bouquet de fleurs complété au point de liage avec du ruban, de la ficelle ou du fil.

7. Procédé selon la revendication 5 ou la revendication 6, **caractérisé en ce qu'**on tient le dispositif d'arrangement floral dans une main pendant qu'on tient le premier élément dans l'autre main et qu'on l'insère à travers une des perforations (14), et
ensuite, on tient le premier élément inséré dans une main, avec le dispositif d'arrangement floral reposant sur le côté extérieur du pouce et de l'index de manière que les éléments restants puissent être insérés à travers la perforation (14) ou les autres perforations du dispositif d'arrangement floral avec l'autre main.
